# EUROPÄISCHE PATENTANMELDUNG

(11) **EP 3 447 171 A1**
(43) Veröffentlichungstag der Anmeldung: **27.02.2019**
(21) Anmeldenummer: 17187335.9
(22) Anmeldetag: 22.08.2017
(51) Int. Cl.: C25D 11/22, C25D 11/24, B60R 13/02

(54) **LEISTENBAUTEIL**

(71) Anmelder: DURA Operating, LLC, Auburn Hills, MI 48326 (US)
(72) Erfinder: RÖHNER, Stephan, 44287 Dortmund (DE); STAUSBERG, Holger, 58644 Iserlohn (DE)
(74) Vertreter: Bungartz Christophersen Partnerschaft mbB Patentanwälte

(57) **Zusammenfassung**

Bei einem Leistenbauteil für ein Kraftfahrzeug mit einer von einer Bauteiloberfläche des Leistenbauteils gebildeten und bei bestimmungsgemäßer Montage am Kraftfahrzeug äußerlich sichtbaren Dekorfläche ist zur Erzeugung eines ansprechenden, dynamischen optischen Erscheinungsbild vorgesehen, dass wenigstens eine das optische Erscheinungsbild der Dekorfläche mitprägende und aus dem Behandlungsverfahren resultierende Eigenschaft der Bauteiloberfläche sich entlang eines Verlaufspfads, der sich entlang der Dekorfläche erstreckt, verändert.

## Beschreibung

Die Erfindung betrifft ein insbesondere metallisches Leistenbauteil für ein Kraftfahrzeug mit einer von einer Bauteiloberfläche des Leistenbauteils gebildeten und bei bestimmungsgemäßer Montage am Kraftfahrzeug äußerlich sichtbaren Dekorfläche, wobei die die Dekorfläche bildende Bauteiloberfläche mit einem das optische Erscheinungsbild der Dekorfläche mitprägenden Behandlungsverfahren behandelt ist. Die Erfindung betrifft ferner ein Verfahren zur Herstellung eines derartigen Leistenbauteils.

Leistenbauteile der vorstehend beschriebenen Art sind im Kraftfahrzeugbau bekannt. Im Außenbereich werden derartige Leistenbauteile insbesondere an Bauteilübergängen wie dem Übergang zwischen Fensterscheibe und Türkarosserie oder als Teil einer die Scheibenflächen einfassenden Rahmenleiste eingesetzt. Bei dem Leistenbauteil kann es sich demnach insbesondere um eine Zierleiste einer Fensterrahmenleiste, eine auf die Türbrüstung einer Fahrzeugtür aufzusetzende Fensterschachtabdeckleiste oder um eine Zierleiste eine Windschutzscheibeneinfassung handeln. Das Leistenbauteil wird dabei zumeist als Zierleiste auf ein an der Fahrzeugkarosserie zu befestigendes (Dichtungs)Profil aufgesetzt. Es kann sich aber auch um eine Blendenleiste wie eine Säulenblende oder um eine sonstige Dekorleiste handeln. Weiter kann das Leistenbauteil auch eine Dachreling sein. Das Leistenbauteil kann ferner sowohl zur Anbringung im Fahrzeuginnenraum als auch als am Fahrzeugäußeren anzubringendes Leistenbauteil vorgesehen sein.

Unter einer Dekorfläche ist eine bei bestimmungsgemäßer Anbringung des Leistenbauteils am Kraftfahrzeug äußerlich sichtbare Bauteiloberfläche des Leistenbauteils zu verstehen, die dazu bestimmt ist, das optische Erscheinungsbild des Kraftfahrzeugs oder des Kraftfahrzeuginnenraums optisch mitzuprägen.

Neben dem mechanischen Bearbeiten einer Bauteiloberfläche eines derartigen metallischen Leistenbauteils zur Bildung einer Dekorfläche (beispielsweise Polieren, Mattieren, Bürsten, Sandstrahlen) und dem Auftrag einer zusätzlichen Materialschicht (beispielsweise durch Lackieren, Verchromen) sind insbesondere auch (elektro)chemische Verfahren zur Aufbereitung der für die Dekorfläche relevanten maßgeblichen Bauteiloberfläche bekannt. Häufig angewandt wird das Anodisieren der Bauteiloberfläche, insbesondere das Versehen der Bauteiloberfläche mit einer Eloxalschicht durch das Eloxal-Verfahren. Grundsätzlich bekannt sind außerdem (elektro)chemische Verfahren wie das Anätzen oder das Elektro-Polieren der Bauteiloberfläche.

Auch wenn derartige, gezielt als Designelemente eingesetzte Leistenbauteile durchaus geeignet sind, das Äußere oder Innere eines Kraftfahrzeugs optisch mitzuprägen und einen bestimmten allgemeinen optischen Gesamteindruck zu erzeugen oder zumindest zu unterstützen, etwa ein edel anmutendes Erscheinungsbild durch die Verwendung von verchromten oder hochglanzpolierten Leisten oder ein eher sportliches Erscheinungsbild durch schwarz lackierte oder schwarz eloxierte Dekorflächen, so ist das Erscheinungsbild des Leistenbauteils selbst in sich statisch, also entlang der Dekorfläche konstant und einheitlich.

Der Erfindung liegt die Aufgabe zugrunde, ein Leistenbauteil der eingangs genannten Art bereitzustellen, das ein optisch in sich dynamischeres Erscheinungsbild aufweist. Ein Fahrzeughersteller soll in die Lage versetzt werden, seinen Kunden mit Blick auf die optische Ausgestaltung derartiger Leistenbauteile und die damit einhergehende Individualisierung eine größere Auswahl an Designmöglichkeiten anzubieten. Die Erfindung stellt ferner ein Verfahren zur Herstellung eines derartigen Leistenbauteils bereit.

Zu diesem Zweck sieht die Erfindung vor, dass wenigstens eine das optische Erscheinungsbild der Dekorfläche mitprägende und aus dem Behandlungsverfahren resultierende Eigenschaft der Bauteiloberfläche sich entlang eines Verlaufspfads, der sich entlang der Dekorfläche erstreckt, verändert.

Bei einem Verfahren zur Herstellung eines derartigen Leistenbauteils ist vorgesehen, dass die Bauteiloberfläche dem Behandlungsverfahren derart ausgesetzt wird, dass eine Dekorfläche erzeugt wird, bei der sich eine das optische Erscheinungsbild der Dekorfläche mitprägende und aus dem Behandlungsverfahren resultierende Eigenschaft der Bauteiloberfläche entlang eines Verlaufspfads, der sich entlang der Dekorfläche erstreckt, verändert. Unter einem Behandlungsverfahren ist insbesondere ein auf das Material, das die für die Dekorfläche maßgebliche Bauteiloberfläche bildet, unmittelbar einwirkendes und insbesondere die Oberflächenbeschaffenheit des Materials beeinflussendes Behandlungsverfahren gemeint. Das Material, das die für die Dekorfläche maßgebliche Bauteiloberfläche bildet, kann insbesondere der das Leistenbauteil selbst strukturell bildende Grundwerkstoff sein.

Der Verlaufspfad ist dabei als der sich entlang der für die Dekorfläche maßgeblichen Bauteiloberfläche erstreckende Pfad zu verstehen, entlang dem sich die maßgebliche das optische Erscheinungsbild prägende Eigenschaft der Bauteiloberfläche ändert. Quer zu diesem Verlaufsweg wird die das optische Erscheinungsbild prägende Eigenschaft typischerweise unverändert verlaufen. In der Regel wird der Verlaufspfad sich in Längsrichtung des Leistenbauteils entlang der Dekorfläche erstrecken (der Längserstreckung des Bauteils folgend von einem Leistenende zum anderen) und dabei auch etwaigen Biegungen folgen.

Das Behandlungsverfahren, mit dem die das Erscheinungsbild der Dekorfläche mitprägende Eigenschaft erzeugt wird und das auf das Material der für die Dekorfläche maßgeblichen Bauteiloberfläche unmittelbar einwirkt, ist bevorzugt ein chemisches oder elektrochemisches Behandlungsverfahren. Neben dem Elektro-Polieren und Anätzen der Bauteiloberfläche kommt insbesondere das Anodisieren in Betracht. Bei der Herstellung des Leistenbauteils kann insbesondere vorgesehen sein, dass das Behandlungsverfahren ein (elektro)chemisches Behandlungsverfahren ist und verschiedene Bereiche der für die Dekorfläche maßgeblichen Bauteiloberfläche dem Behandlungsverfahren über unterschiedliche Zeitdauern ausgesetzt sind.

Gleichwohl auch denkbar, die für die Dekorfläche maßgebliche Bauteiloberfläche unterschiedlichen (insbesondere über die Zeit und/oder in Bezug auf die zu erzeugende Dekorfläche bereichsweise veränderlichen) Prozessparametern (z.B. Temperaturen, Stromstärken, elektrischen Spannungen, Bestrahlungsintensitäten, Bearbeitungsintensitäten, Bearbeitungstiefen) und/oder unterschiedlichen Medien (z.B. verschieden intensiv auf die Oberfläche wirkenden Säuren) oder Medienkonzentrationen (z.B. unterschiedlich stark verdünnte Lösungen) auszusetzen. So ist beispielsweise denkbar, die für die Erzeugung der Dekorfläche gewünschte Veränderung der Eigenschaft der Bauteiloberfläche durch eine sich während des Behandlungsverfahrens entlang des Verlaufspfads in ihrer Wirkung auf die Oberfläche intensivierende oder nachlassende oder bereichsweise zeitlich länger oder kürzer einwirkende Bestrahlung zu erreichen, durch die sich in Abhängigkeit der Bestrahlungsintensität oder Bestrahlungsdauer eine Reduktion des Glanzgrades und/oder der Rauigkeit der Oberfläche erzielen lässt. Für eine derartige Behandlung kommt zum Beispiel die Bestrahlung mit hochenergetischer Laserstrahlung oder mit abrasiv wirkenden Medien (z.B. Sandstrahlen) in Betracht.

Die Erfindung ist demnach nicht auf chemische oder elektrochemische Behandlungsverfahren beschränkt, sondern der gewünschte optische Effekt kann auch durch in erster Linie mechanisch und/oder energetisch auf die für die Dekorfläche maßgebliche Bauteiloberfläche einwirkende Verfahren erzeugt sein.

Bevorzugt ist die die Dekorfläche bildende Bauteiloberfläche unter Erzeugung einer das optische Erscheinungsbild der Dekorfläche mitprägenden Eloxalschicht eloxiert. Die das optische Erscheinungsbild der Dekorfläche mitprägende Eigenschaft der Eloxalschicht, durch deren Veränderung die Änderung des optischen Erscheinungsbildes der Dekorfläche zumindest auch hervorgerufen ist, kann insbesondere der Zuwachs und/oder die Abnahme der Farbtiefe der Eloxalschicht entlang des Verlaufspfads sein.

Mit Farbtiefe ist insbesondere die Farbintensität, also eine eher blasse oder eher intensive Einfärbung. Die Farbtiefe wird insbesondere durch die Anzahl der sich über die Zeit in die Oxidschicht einlagernden Farbpigmente einer bestimmten Farbe bestimmt. Um ein derartiges Leistenbauteil mit sich entlang des Verlaufspfads ändernder Farbtiefe zu erzeugen, kann vorgesehen sein, dass das Leistenbauteil kontinuierlich oder stufenweise aus einer (elektro)chemischen Umgebung, die für die Entstehung der das optische Erscheinungsbild der Dekorfläche mitprägenden Eigenschaft mitursächlich ist, insbesondere also aus der für das Einfärben verantwortliche Farbstofflösung, entfernt wird.

Die das optische Erscheinungsbild der Dekorfläche mitprägende Eigenschaft der Eloxalschicht, durch deren Veränderung die Änderung des optischen Erscheinungsbildes der Dekorfläche zumindest auch hervorgerufen ist, kann alternativ oder zusätzlich zu einer Farbtiefenänderung der Eloxalschicht der Zuwachs und/oder die Abnahme der Anzahl unterschiedlicher Farben der in die Eloxalschicht eingelagerten Farbpartikel entlang des Verlaufspfads sein. Hierbei ist es von Vorteil, wenn die Farbe der Farbpartikel, die an einer bestimmten Stelle einen Zuwachs der Anzahl unterschiedlicher Farben der in die Eloxalschicht eingelagerten Farbpartikel entlang des Verlaufspfads hervorrufen, gegenüber den Farben der an der maßgeblichen Stelle bereits eingelagerten Farbpartikel dunkler ist. Unter dem Begriff "unterschiedliche Farbe" ist dabei auch eine Änderung der Farbpigmentintensität entlang des Verlaufspfads zu verstehen, aus der sich entlang des Verlaufspfads eine Dekorfläche mit einem im Wesentlichen entlang des Verlaufspfads einheitlichen Farbton, der sich jedoch von einem blass eingefärbten Bereich zu einem intensiv eingefärbten Bereich verändert, entwickeln lässt.

Zur Herstellung eines derartigen Leistenbauteils kann vorgesehen sein, dass das Leistenbauteil mit unterschiedlichen Eintauchtiefen nacheinander in unterschiedlich färbende Farbbäder, die jeweils sich in die beim Eloxieren entstehende Oxidschicht einlagernde Farbpartikel unterschiedlicher Farbe oder Farbintensität enthalten, eingetaucht wird. Dabei ist es vorteilhaft, wenn bei dem nacheinander erfolgenden Eintauchen des Leistenbauteils in unterschiedlich färbende Farbbäder die Eintauchtiefe nach und nach abnimmt. Ferner ist es von Vorteil, wenn bei dem nacheinander erfolgenden Eintauchen des Leistenbauteils in unterschiedlich färbende Farbbäder die Farbe zunehmend dunkler wird.

Auf die vorstehend beschriebene Weise entsteht ein Leistenbauteil mit einer sich entlang des Verlaufspfads ändernden optischen Eigenschaft der für die Dekorfläche maßgeblichen Bauteiloberfläche.

Besonders bevorzugt ist, wenn sich die das optische Erscheinungsbild der Dekorfläche mitprägende Eigenschaft der Bauteiloberfläche sich entlang des Verlaufspfads graduell ändert. Je nach Anwendungsfall und gewünschtem optischen Ergebnis kann es sinnvoll sein, wenn die das optische Erscheinungsbild der Dekorfläche mitprägende Eigenschaft der Bauteiloberfläche, durch deren Veränderung die Änderung des optischen Erscheinungsbildes der Dekorfläche entlang des Verlaufspfads hervorgerufen ist, sich entlang des Verlaufspfads zumindest abschnittsweise, bevorzugt aber - von einem etwaigen Maximum oder Minimum der maßgeblichen Eigenschaft abgesehen - über den gesamten Verlaufspfad kontinuierlich verändert. Es kann aber auch eine stufenweise Veränderung der maßgeblichen Eigenschaft vorgesehen sein.

Weiter kann vorgesehen sein, dass die Veränderung der das optische Erscheinungsbild der Dekorfläche mitprägenden Eigenschaft der Bauteiloberfläche, durch deren Veränderung die Änderung des optischen Erscheinungsbildes der Dekorfläche hervorgerufen ist, einen das Maß der Veränderung kennzeichnenden Verlaufsgradienten aufweist und der Verlaufsgradient entlang des Verlaufspfads durchgehend positiv (beispielsweise eine durchgehend zunehmende Farbtiefe), durchgehend negativ (beispielsweise eine durchgehend abnehmende Farbtiefe) oder sowohl negativ als auch positiv ist (beispielsweise eine entlang des Verlaufspfads zunächst zunehmende und dann wieder abnehmende Farbtiefe).

Mit einer das optische Erscheinungsbild prägenden Eigenschaft der Eloxalschicht kann entsprechend der vorstehenden Ausführungen also insbesondere eine sich verändernde Farbtiefe einer Eloxalschicht gemeint sein, die beispielsweise durch unterschiedlich lange Einwirkzeiten einer Farbstofflösung auf die beim Eloxieren erzeugte Oxidschicht erzeugt werden kann. Es kann sich aber - zusätzlich oder alternativ zu einer Farbtiefenveränderung entlang des Verlaufspfads - aber auch um eine Änderung der Anteile der entlang des Verlaufspfads eingelagerten und die Farbe der Eloxalschicht prägenden Farbpartikel unterschiedlicher Farbe handeln.

Aus der bevorzugten Erzeugung des gewünschten Effekts durch das Eloxieren zumindest der für die Dekorfläche maßgeblichen Bauteiloberfläche ergibt sich, dass das Leistenbauteil bevorzugt ein Leistenbauteil aus Metall, insbesondere aus Leichtmetall ist. Für dieses Verfahren eignen sich vor allem Leistenbauteile aus Aluminiumlegierungen.

Zum Erzielen des gewünschten optischen Effekts lassen sich auch verschiedene der zuvor angesprochenen Verfahren kombinieren. So kann zum Beispiel ein Leistenbauteil zunächst mit einem ersten Behandlungsverfahren behandelt werden, durch das sich entlang des Verlaufspfads eine Änderung einer ersten optischen Eigenschaft erzeugen lässt (z.B. die Änderung des Glanzgrades der für die zu erzeugende Dekorfläche maßgeblichen Bauteiloberfläche durch Bestrahlung). Anschließend wird die Bauteiloberfläche einem zweiten Behandlungsverfahren unterzogen, durch das eine Änderung einer zweiten optischen Eigenschaft entlang des Verlaufspfads hervorgerufen wird (z.B. die Änderung der Farbtiefe bzw. Farbintensität durch das vorstehend beschriebene Eloxalverfahren). Eine derartige Kombination eines ersten und eines zweiten Behandlungsverfahrens bietet sich insbesondere dann an, wenn das zweite Behandlungsverfahren die Änderung der ersten optischen Eigenschaft, die durch das erste Behandlungsverfahren hervorgerufen wurde, nicht nachträglich wieder ausgleicht sondern die erste optische Eigenschaft weiter sichtbar bleibt. Durch eine derartige Kombination der Behandlungsverfahren lässt sich beispielsweise eine Dekorfläche erzeugen, deren Erscheinungsbild sich entlang des Verlaufspfads von einem kaum merklich eingefärbten gefärbten, hochglanzpolierten, farblos eloxierten Bereich hin zu einem hochgradig matten, intensiv eingefärbten Bereich hin verändert.

In den Zeichnungen zeigen
- Figur 1: eine von zwei Leistenbauteilen umgebene hintere Seitenscheibe eines Kraftfahrzeugs,
- Figur 2: eine schematische Darstellung einer ersten Herstellungsvariante für das in Figur 1 gezeigte Leistenbauteil,
- Figur 2a: eine Abwicklung einer Schnittansicht des Leistenbauteils entlang der in Figur 1 angedeuteten Schnittansicht A-A für ein nach Figur 2 hergestelltes Leistenbauteil,
- Figur 3: eine schematische Darstellung einer zweiten Herstellungsvariante für das in Figur 1 gezeigte Leistenbauteil, und
- Figur 3a: eine Abwicklung einer Schnittansicht des Leistenbauteils entlang der in Figur 1 angedeuteten Schnittansicht A-A für ein nach Figur 3 hergestelltes Leistenbauteil.

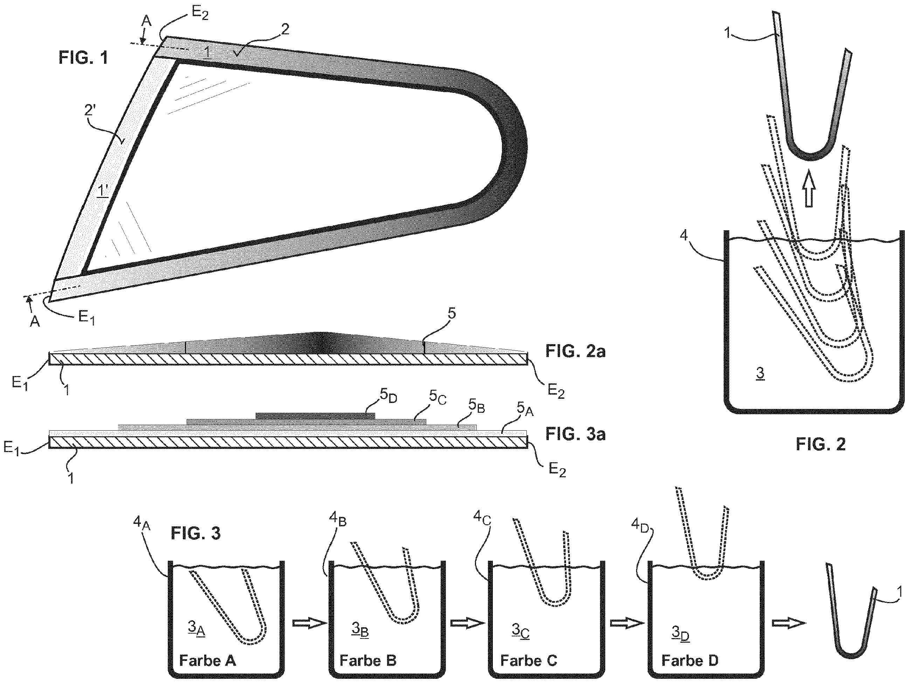

Figur 1 zeigt eine von zwei als Fensterrahmenleisten ausgebildeten Leistenbauteilen 1, 1' eingefasste hintere Seitenscheibe eines Kraftfahrzeugs. Die Leistenbauteile 1,1' weisen jeweils eine nach außen gerichtete Dekorfläche 2, 2' auf, die von der nach außen gerichteten Bauteiloberfläche des jeweiligen Leistenbauteils 1,1' gebildet ist.

Die Dekorfläche 2' des links dargestellten Leistenbauteils 1', mittels dem ein vorderer Rand der Seitenscheibe eingefasst ist, weist ein statisches, durchgängig gleichförmiges optisches Erscheinungsbild auf. Demgegenüber ändert sich das optische Erscheinungsbild der Dekorfläche 2 des Leistenbauteils 1, mittels dem die nach oben, unten und hinten gerichtete, heckseitig gerundete Seitenscheibenkante eingefasst ist, entlang eines Verlaufspfads E₁-E₂, der sich entlang der Dekorfläche 2 des Leistenbauteils 1 von einem ersten Endabschnitt E₁ ausgehend zu einem zweiten Endabschnitt E₂ des Leistenbauteils 1 um die heckseitige Scheibenrundung herum erstreckt.

Aus Figur 1 ist ersichtlich, dass die Dekorfläche 2 entlang des Verlaufspfads E₁-E₂ zunächst zunehmend dunkler wird, um dann - in dem in der Figur 1 dargestellten Ausführungsbeispiel etwa nach der Hälfte des Verlaufspfads - wieder zunehmend heller zu werden. So entsteht eine Scheibeneinfassung, deren optisches Erscheinungsbild sich in der Gesamtheit in Bezug auf die Ausrichtung am Kraftfahrzeug von vorne nach hinten farblich bzw. hinsichtlich der Farbtiefe bzw. Farbintensität verändert. Sofern die für die Dekorfläche maßgebliche Bauteiloberfläche des Leistenbauteils metallisch ist, geht die Dekorfläche von einem hellen metallischen Glanz an den Endabschnitten E₁ und E₂ zu einem dunklen Farbton im heckseitigen Abschnitt des Leistenbauteils unter kontinuierlicher Zunahme der Farbtiefe über.

Figur 2 zeigt eine schematische Darstellung eines ersten Behandlungsverfahrens, mit dem das in Figur 1 gezeigte Leistenbauteil hergestellt werden kann. Bei dem Behandlungsverfahren handelt es sich ein Eloxalverfahren. Das für das optische Erscheinungsbild der Eloxalschicht letztlich maßgebliche Verfahren ist das Einfärben der zuvor in einem Oxidationsbad auf der Bauteiloberfläche erzeugten Oxidschicht, bei dem sich abhängig von Zeitdauer und/oder abhängig von bestimmten Prozessparametern mehr oder weniger Farbpartikel in der Oxidschicht einlagern.

In Figur 2 ist angedeutet, dass das Leistenbauteil 1, das zur Erzeugung der Oxidschicht zunächst in ein Oxidationsbad eingetaucht und anschließend neutralisiert worden ist, in eine Farbstofflösung 3 eingetaucht wird, die die chemische Umgebung während des Behandlungszeitraums bildet, der für das spätere optische Erscheinungsbild maßgeblich ist. Das Leistenbauteil 1 wird zeitlich kontrolliert nach und nach (bevorzugt in einer zeichnerisch nicht darstellbaren kontinuierlichen Bewegung) aus der Farbstofflösung 3 entfernt. Bei der in Figur 2 gezeigten Verfahrensvariante wird das Leistenbauteil 1 hierzu aus der Farbstofflösung herausgehoben. Selbstverständlich kann zwecks Entfernen des Leistenbauteils aus der für die Behandlung maßgeblichen chemischen Umgebung auch das die Farbstofflösung aufnehmende Behältnis 4 gegenüber dem Leistenbauteil abgesenkt oder die Farbstofflösung 3 nach und nach aus dem Behältnis 4 abgelassen oder abgepumpt werden.

Die tiefer in die Farbstofflösung 3 eintauchenden Abschnitte des Leistenbauteils 1 stehen somit länger mit der Farbstofflösung bzw. der für das Behandlungsverfahren maßgeblichen chemischen Umgebung in Kontakt als die weniger tief in die Farbstofflösung 3 eintauchenden Abschnitte, so dass sich in Abhängigkeit der Behandlungszeit, die ein bestimmter Leistenbauteilabschnitt der Farbstofflösung 3 ausgesetzt ist, eine unterschiedliche Farbtiefe entlang der für die Dekorfläche maßgeblichen Bauteiloberfläche ausbildet.

Figur 2a zeigt in einer schematischen Ansicht die Abwicklung des in Figur 1 angedeuteten Schnitts A-A. Die Eloxalschicht 5 ist zwecks zeichnerischer Darstellung deutlich überzeichnet. Außerdem ist die Dicke der Eloxalschicht 5 entlang des Verlaufspfads anwachsend und abnehmend dargestellt. Tatsächlich ist die Eloxalschichtdicke selbstverständlich konstant. Die anwachsende bzw. abnehmende Dicke dient der zusätzlichen zeichnerischen Darstellung der Zunahme bzw. Abnahme der durch das Verfahren nach Figur 2 erzeugten Farbtiefe entlang des Verlaufspfads E₁-E₂. Aus der Darstellung in Figur 3a ergibt sich, dass die das optische Erscheinungsbild der Dekorfläche mitprägende Eigenschaft der Bauteiloberfläche (die sich aus der Anzahl der über die Zeit eingelagerten Farbpartikel ergebende Farbtiefe) sich entlang des Verlaufspfads kontinuierlich verändert.

Figur 3 zeigt eine zweite Variante eines Behandlungsverfahrens, mit dem die Veränderung einer das optische Erscheinungsbild der Dekorfläche mitprägenden Eigenschaft entlang der Dekorfläche erzeugt werden kann. In Figur 3 sind nacheinander 4 verschiedene Behältnisse 4_{A} bis 4_{D} dargestellt, in denen sich jeweils eine Farbstofflösung 3_{A}, 3_{B}, 3_{C} und 3_{D} mit jeweils unterschiedlichen Farben A, B, C und D. Die Farben A bis D werden dabei ausgehend von Behältnis 4_{A} bis zu Behältnis 4_{D} zunehmend dunkler.

Das Leistenbauteil wird nacheinander in die verschiedenen Behältnisse 4_{A}, 4_{B}, 4_{C} und 4_{D} mit jeweils abnehmender Eintauchtiefe eingetaucht, so dass Abschnitte des Leistenbauteils in dem in der Figur dargestellten Beispiel teilweise nur einmal, teilweise zweimal, teilweise dreimal und teilweise viermal in Kontakt mit der in den Behältnissen jeweils vorhandenen unterschiedlichen Farbstofflösungen 3_{A}, 3_{B}, 3_{C} und 3_{D} kommen. Hierdurch ergibt sich entlang des Verlaufspfads E₁-E₂ ein Farbverlauf auf der Dekorfläche, der mittels Figur 3a nachvollzogen werden kann, die entsprechend der ebenfalls überzeichneten Darstellung in Figur 2a die Zu- und Abnahme der Anzahl der unterschiedlich färbenden Farbpartikel, die sich entlang des Verlaufspfads E₁-E₂ in die Oxidschicht einlagern, stark vereinfacht und schematisiert veranschaulicht. Aus der Darstellung in Figur 3a ergibt sich, dass die das optische Erscheinungsbild der Dekorfläche mitprägende Eigenschaft der Bauteiloberfläche (die Anzahl der eingelagerten Farben und die Farbtiefe) sich entlang des Verlaufspfads stufenweise verändert.

Selbstverständlich ist auch eine Kombination der in Figur 2 und Figur 3 gezeigten Verfahrensvarianten denkbar, bei der das in die mit unterschiedlichen Farbstofflösungen gefüllten Behältnisse eingetauchte Leistenbauteil zeitlich kontrolliert aus der jeweiligen Farbstofflösung entfernt wird.

Durch die Verwendung von unterschiedlichen Farben in einer Mehrzahl von Behältnissen und die bei jedem Eintauchvorgang abnehmenden Eintauchtiefen ist neben einer bloßen Zu- oder Abnahme der Farbtiefe auch die Realisierung eines Farbwechsels möglich, insbesondere ein Farbwechsel von einer hellen Farbe hin zu einer dunkleren Farbe.

### Bezugszeichenliste

- 1,1': Leistenbauteil
- 2,2': Dekorfläche
- 3,3_{A-D}: Farbstofflösung
- 4,4_{A-D}: Behältnis
- 5,5_{A-D}: Eloxalschicht
- E₁/E₂: erster/zweiter Endabschnitt des Leistenbauteils

## Patentansprüche

1. Leistenbauteil für ein Kraftfahrzeug mit einer von einer Bauteiloberfläche des Leistenbauteils (1) gebildeten und bei bestimmungsgemäßer Montage am Kraftfahrzeug äußerlich sichtbaren Dekorfläche (2), wobei die die Dekorfläche (2) bildende Bauteiloberfläche mit einem das optische Erscheinungsbild der Dekorfläche (2) mitprägenden Behandlungsverfahren behandelt ist, **dadurch gekennzeichnet, dass** wenigstens eine das optische Erscheinungsbild der Dekorfläche (2) mitprägende und aus dem Behandlungsverfahren resultierende Eigenschaft der Bauteiloberfläche sich entlang eines Verlaufspfads (E₁-E₂), der sich entlang der Dekorfläche (2) erstreckt, verändert.

2. Leistenbauteil nach Anspruch 1, **dadurch gekennzeichnet, dass** das Behandlungsverfahren ein chemisch und/oder elektrochemisch und/oder mechanisch und/oder energetische auf die für die Dekorfläche maßgebliche Bauteiloberfläche einwirkendes Behandlungsverfahren ist.

3. Leistenbauteil nach Anspruch 1 oder Anspruch 2, **dadurch gekennzeichnet, dass** die die Dekorfläche (2) bildende Bauteiloberfläche unter Erzeugung einer das optische Erscheinungsbild der Dekorfläche (2) mitprägenden eingefärbten Eloxalschicht (5) eloxiert ist.

4. Leistenbauteil nach Anspruch 3, **dadurch gekennzeichnet, dass** die das optische Erscheinungsbild der Dekorfläche (2) mitprägende Eigenschaft der Zuwachs und/oder die Abnahme der Farbtiefe der eingefärbten Eloxalschicht (5) entlang des Verlaufspfads (E₁-E₂) ist.

5. Leistenbauteil nach Anspruch 3 oder Anspruch 4, **dadurch gekennzeichnet, dass** die das optische Erscheinungsbild der Dekorfläche (2) mitprägende Eigenschaft der Eloxalschicht (5) der Zuwachs und/oder die Abnahme der Anzahl unterschiedlicher Farben (A-D) der in die Eloxalschicht (5) eingelagerten Farbpartikel entlang des Verlaufspfads (E₁-E₂) ist.

6. Leistenbauteil nach dem vorhergehenden Anspruch, **dadurch gekennzeichnet, dass** die Farbe (A-D) derjenigen Farbpartikel, die einen Zuwachs der Anzahl unterschiedlicher Farben (A-D) der in die Eloxalschicht (5) eingelagerten Farbpartikel entlang des Verlaufspfads (E₁-E₂) hervorrufen, gegenüber den Farben (B-D) der entlang des Verlaufspfads (E₁-E₂) bereits eingelagerten Farbpartikel dunkler ist.

7. Leistenbauteil nach einem der vorhergehenden Ansprüche, **dadurch gekennzeichnet, dass** die das optische Erscheinungsbild der Dekorfläche (2) mitprägende Eigenschaft der Bauteiloberfläche, durch deren Veränderung die Änderung des optischen Erscheinungsbildes der Dekorfläche (2) entlang des Verlaufspfads (E₁-E₂) hervorgerufen ist, sich entlang des Verlaufspfads (E₁-E₂) zumindest abschnittsweise kontinuierlich oder stufenweise verändert.

8. Leistenbauteil nach einem der vorhergehenden Ansprüche, **dadurch gekennzeichnet, dass** die Veränderung der das optische Erscheinungsbild der Dekorfläche (2) mitprägenden Eigenschaft der Bauteiloberfläche, durch deren Veränderung die Änderung des optischen Erscheinungsbildes der Dekorfläche (2) hervorgerufen ist, einen Verlaufsgradienten aufweist und der Verlaufsgradient der Änderung entlang des Verlaufspfads (E₁-E₂) durchgehend positiv, durchgehend negativ oder sowohl negativ als auch positiv ist.

9. Verfahren zur Herstellung eines Leistenbauteils (1) nach einem der der vorhergehenden Ansprüche, **dadurch gekennzeichnet, dass** die Bauteiloberfläche dem Behandlungsverfahren derart ausgesetzt wird, dass eine Dekorfläche (2) erzeugt wird, bei der sich eine das optische Erscheinungsbild der Dekorfläche (2) mitprägende und aus dem Behandlungsverfahren resultierende Eigenschaft der Bauteiloberfläche entlang eines Verlaufspfads(E₁-E₂), der sich entlang der Dekorfläche (2) erstreckt, verändert.

10. Verfahren zur Herstellung eines Leistenbauteils nach dem vorhergehenden Anspruch, **dadurch gekennzeichnet, dass** das Behandlungsverfahren ein chemisches oder elektrochemisches Behandlungsverfahren ist und verschiedene Bereiche der für die Dekorfläche maßgeblichen Bauteiloberfläche dem Behandlungsverfahren über unterschiedliche Zeitdauern und/oder unterschiedlichen Medien bzw. Medienkonzentrationen und/oder Prozessparametern ausgesetzt sind.

11. Verfahren zur Herstellung eines Leistenbauteils nach einem der beiden vorhergehenden Ansprüche, **dadurch gekennzeichnet, dass** das Leistenbauteil (1) zumindest abschnittsweise kontinuierlich oder stufenweise aus einer chemischen oder elektrochemischen Umgebung, mittels der die das optische Erscheinungsbild der Dekorfläche (2) mitprägende Eigenschaft erzeugt wird, entfernt wird.

12. Verfahren zur Herstellung eines Leistenbauteils nach einem der drei vorhergehenden Ansprüche, **dadurch gekennzeichnet, dass** das Leistenbauteil (1) mit unterschiedlichen Eintauchtiefen nacheinander in unterschiedlich färbende Farbstofflösungen (3_{A}-3_{D}) eingetaucht wird.

13. Verfahren nach dem vorhergehenden Anspruch, **dadurch gekennzeichnet, dass** das bei dem nacheinander erfolgenden Eintauchen des Leistenbauteils in unterschiedlich färbende Farbstofflösungen (3_{A}-3_{D}) die Eintauchtiefe abnimmt.

14. Verfahren nach einem der beiden vorhergehenden Ansprüche, **dadurch gekennzeichnet, dass** das bei dem nacheinander erfolgenden Eintauchen des Leistenbauteils in unterschiedlich färbende Farbstofflösungen (3_{A}-3_{D}) die Farbe zunehmend dunkler wird.
